# EUROPEAN PATENT SPECIFICATION

(11) **EP 1 681 155 B1**
(45) Date of publication and mention of the grant of the patent: **07.01.2009**
(21) Application number: 06005437.6
(22) Date of filing: 05.11.1999
(51) Int. Cl.: B31B 19/90, B65D 33/24, B65B 9/20, B29C 65/00, A44B 18/00

(54) **Touch fasteners and their manufacture**
Haftverschlüsse und deren Herstellung
Fixations par contact et leur fabrication

(30) Priority: 06.11.1998 US 187389; 16.04.1999 US 293257; 14.10.1999 US 159489 P
(43) Date of publication of application: 19.07.2006
(62) Divisional of application: 02022308.7
(73) Proprietor: Velcro Industries B.V. (NL), Curacao (AN)
(72) Inventor: Clune, William, Manchester, NH 03108 (US); Shepard, William H., Amherst, NH 03031 (US); Provost, George A., Litchfield, NH 03052 (US)
(74) Representative: Müller-Boré & Partner Patentanwälte

(56) References cited:
- US-A- 4 761 318
- US-A- 5 260 015
- US-A- 5 669 120

## Description

### BACKGROUND OF THE INVENTION

This invention relates to a method of fabricating touch fasteners, such as composite touch fasteners having both loops and loop-engageable fastener elements extending from one side of a common substrate, according to the preamble of claim 1, and to an apparatus for molding fasteners according to the preamble of claim 14.

There has been much development over the last thirty years in the field of hook-and-loop fasteners. Early touch fastener products of this type consisted of two mating tapes, each being knit or woven. One tape would include loops of filament woven into a base, and the other would include filaments woven to form loops and then cut to form hooks. In some cases free ends of drawn plastic filaments on the male tape would be melted to form protruding heads. This shape of fastener element is sometimes called a "mushroom", to distinguish it from "hook"-shaped elements with re-entrant crooks. In some cases, arrays of similar discrete fastening elements on two parts are shaped to engage with each other to form a releasable closure, these being known as "self-engageable" hooks or closures.

US 5 260 015 discloses a method of fabricating touch fasteners and an apparatus for molding fasteners according to the preamble of claims 1 and 14, respectively.

More recently, continuous molding of fastener elements extending from a common sheet-form resin base has resulted in less expensive and thinner male tapes. Significant improvements in this area include the development of continuous fastener tape molding using fixed mold cavities (see Fischer, U.S. Patent 4,794,028), and the ability to provide loops on the back side of the male fastener tape as the fastener tape substrate and elements are being formed (see Kennedy et al., U.S. Patent 5,260,015), thus creating a composite fastener tape capable of fastening to itself. Further improvements have reduced the size of the fastener elements moldable by such techniques, to heights of 0.38 mm (0.015 inch) or less, which provide a very smooth touch when arranged in dense arrays.

Another example of molded fastener tape involves molding perform stems or similar structures integral with a plastic backing substrate, and thereafter performing a forming operation to convert outer portions to a J hook, a mushroom head or similar engaging structure.

As molded fastener tape has been improved to be more flexible and less expensive, it has found application in disposable garments, such as diapers. Further improvements are desirable to extend the applicability of molded touch fastener products to other uses.

### SUMMARY OF THE INVENTION

The objective of the invention is achieved by a method of fabricating a touch fastener and by a molding apparatus for molding fasteners as disclosed in the characterising portion of claims 1 and 14, respectively.

According to a first aspect of the invention, a method of fabricating a closure strip is provided. The method includes the steps of molding a continuous, sheet-form substrate having a band of fastener elements integrally molded with and extending from a front face of the substrate; and attaching a continuous strip of loop material to resin forming the front face of the substrate to form a discrete band of loops spaced apart from the band of fastener elements.

In some cases the step of molding includes forming the substrate to have a longitudinal frangible section arranged to be disposed between the band of loops and the band of fastener elements. The frangible section of the substrate may define, for example, at least one longitudinally extending groove, with the molding step including forming the groove in the substrate as the substrate is formed. The groove may be formed in the front or back face of the substrate.

In some instances the frangible section defines a pair of longitudinally extending grooves in the substrate, and the step of molding may also include simultaneously forming a longitudinal rib extending from the substrate between the grooves.

In some cases the step of molding includes simultaneously forming a longitudinal rib extending from the substrate, the rib arranged to be disposed between the bands of fastener elements and loops. The rib, in some instances, is molded to be closer to one than the other of the bands of fastener elements and loops.

The step of molding, for some applications, includes simultaneously embedding a longitudinally continuous filament in resin of the substrate. The filament may be completely enclosed by resin of a rib extending from one face of the substrate, for example.

In some preferred applications of the method of the invention, the strip of loop material comprises a non-woven web of entangled fibers forming the loops and having a basis weight of less than about 136 grams per square meter (4 ounces per square yard).

In some embodiments the step of attaching includes encapsulating fibers of the strip of loop material in resin of the substrate across the width of the strip of loop material. By "width" of the loop strip, we mean the entire transverse dimension of the preformed strip, as measured between the outermost edges of the preformed strip before it is attached to the substrate.

The strip of loop material, in some cases, has a fiber density which is substantially constant across its width, and the step of attaching includes permanently bonding discrete regions of the strip of loop material to the substrate while leaving other regions of the strip of loop material in a less bonded condition. These discrete, more encapsulated regions may be spaced apart longitudinally along the loop strip, extend lengthwise along the loop strip and be spaced apart widthwise, or be arranged in a checkerboard pattern, for instance.

When we refer to regions of the loop strip as being more "encapsulated" than other regions, we mean that the fibers of the more encapsulated regions are generally more thoroughly embedded in the resin of the substrate than the fibers of other regions. Generally, this will involve a deeper penetration of the substrate resin into the loop strip.

In some embodiments the strip of loop material is permanently attached to the substrate after the substrate is molded, such as by heating the front face of the substrate and then pressing the loop material against the front face of the substrate with the front face of the substrate at an elevated temperature.

In other embodiments the strip of loop material is permanently attached to the substrate as the substrate is molded. In some such cases the steps of molding and attaching include continuously feeding the strip of loop material through a nip defined between a rotating mold roll and a pressure roll, the rotating mold roll defining a multiplicity of cavities about its periphery for molding the fastener elements, while continuously introducing molten resin to the mold roll under conditions which cause the resin to fill the cavities and form the substrate, such that pressure in the nip bonds the strip of loop material to resin of the substrate.

In some configurations the mold roll has two extending ridges that form a pair of grooves in the substrate. The step of molding may also include simultaneously forming a longitudinal rib extending from the substrate between the pair of grooves, the mold roll defining, between its two ridges, a channel for forming the longitudinal rib.

In some instances the steps of molding and attaching include continuously feeding the strip of loop material through a gap defined between a rotating mold roll and a stationary extrusion head, the rotating mold roll defining a multiplicity of cavities about its periphery for molding the fastener elements, while continuously introducing molten resin to the gap under conditions which cause the resin to fill the cavities and form the substrate and to permanently adhere to the strip of loop material.

In some embodiments the method also includes, while continuously feeding the strip of loop material through the gap, continuously feeding a strip of preformed material through the gap between the strip of loop material and the extrusion head, such that the preformed material inhibits the encapsulation of fibers of the strip of loop material in predetermined regions and the preformed material is incorporated into the closure strip. This preformed material is preferably selected from the group consisting of paper, fabric and plastic film, and may have perforations through it for allowing heavier penetration of substrate resin in some predetermined areas.

In some cases the steps of molding and attaching include continuously feeding the strip of loop material through a nip defined adjacent the periphery of a rotating mold roll, the mold roll comprising at least one staking ring having a contoured outer edge and arranged to hold a predetermined region of the strip of loop material against the resin under pressure in the gap. The outer edge of the staking ring may have protrusions spaced about its periphery, for example, with the protrusions corresponding to discrete regions of relatively greater encapsulation of the strip of loop material. Preferably, the mold roll comprises multiple staking rings arranged to produce a predetermined bonding pattern across the strip of loop material.

In some cases, the strip of loop material has regions of substantially higher loft than regions corresponding to the discrete regions that are substantially more encapsulated by resin.

By "loft", we mean the distance the exposed loops of the loop material extend from the front face of the substrate, as presented for engagement by fastener elements.

According to a second aspect of the invention, a method of fabricating a closure strip is provided. The closure strip is in the form of a sheet-form resin substrate having a front face, with both a loop strip and an array of loop-engageable fastener elements carried on the front face of the substrate. The loop strip has width and forms a discrete band of hook-engageable, extended loops along the length of the closure strip. The array of loop-engageable fastener elements forms a discrete band of fastener elements extending longitudinally along the length of the closure strip and spaced apart from the band of loops, the substrate having a frangible section between the band of loops and the band of fastener elements. The method includes the steps of molding a continuous, sheet-form substrate having both a band of fastener elements integrally molded with and extending from its front face, and a frangible section, and attaching a continuous strip of loop material to resin forming the front face of the substrate to form a band of loops, with the frangible section of the substrate disposed between the band of loops and the band of fastener elements.

According to a third aspect of the invention, a method of fabricating a composite touch fastener is provided. The composite touch fastener is in the form of an elongated, sheet-form resin substrate having a front face, with both a loop strip and an array of loop-engageable fastener elements carried on the front face of the substrate. The loop strip has width and forms a discrete band of hook-engageable, exposed loops extending longitudinally along the substrate. The array of loop-engageable fastener elements forms a discrete band of fastener elements extending longitudinally along the length of the substrate. The method includes the steps of molding a continuous, sheet-form substrate having a band of fastener elements integrally molded with and extending from its front face, and attaching a continuous strip of loop material to resin forming the front face of the substrate to form a band of loops.

Preferably, the strip of loop material comprises a non-woven web of entangled fibers forming the loops and having a basis weight of less than about 4 ounces per square yard (more preferably, less than about 2 ounces per square yard).

In some embodiments, the strip of loop material has a fiber density that is substantially constant across its width, yet the step of attaching permanently bonds discrete regions of the strip of loop material to the substrate while leaving other regions of the strip of loop material in a less bonded condition.

In some cases, the strip of loop material is permanently attached to the substrate as the substrate is molded. For instance, in some preferred methods, the steps of molding and attaching include continuously feeding the strip of loop material through a gap defined adjacent a rotating mold roll (defining a multiplicity of cavities about its periphery for molding the fastener elements), while continuously introducing molten resin to the mold roll under conditions which cause the resin to fill the cavities and form the substrate, such that pressure in the gap bonds the strip of loop material to resin of the substrate.

In some cases, the gap is a nip defined between the mold roll and a pressure roll.

In some other cases, the gap is defined between the mold roll and a fixed extrusion head.

In some embodiments, the mold roll contains at least one staking ring having a contoured outer edge, the staking ring arranged to hold a predetermined region of the strip of loop material against the resin under pressure in the gap.

In one presently preferred configuration, the outer edge of the staking ring has protrusions spaced about its periphery, the protrusions corresponding to discrete regions of relatively greater encapsulation of the strip of loop material.

In some cases, the mold roll has multiple staking rings arranged to produce a predetermined bonding pattern across the strip of loop material.

According to a fourth aspect of the invention, a method of fabricating a composite touch fastener is provided. The touch fastener is in the form of an elongated sheet-form resin substrate carrying both a preformed material and an array of loop-engageable fastener elements integrally molded with the substrate. The method includes molding a continuous, sheet-form substrate having a band of fastener elements integrally molded with and extending from the substrate, by continuously introducing molten resin to a gap defined adjacent a rotating mold roll defining a multiplicity of cavities about its periphery for molding the fastener elements, under conditions which cause the resin to fill the cavities and form the substrate, while permanently attaching a continuous strip of preformed material to resin of the substrate in a nip defined between the mold roll and a pressure roll, by causing pressure variations within the nip. The pressure variations result in regions of relatively high penetration of substrate resin into the preformed material and regions of relatively low penetration of substrate resin into the preformed material.

In some preferred embodiments, the mold roll has protrusions extending radially into the nip, for causing local increases in nip pressure that correspond to the regions of relatively high penetration of substrate resin.

In some embodiments, the pressure roll has protrusions extending radially into the nip, the protrusions causing local increases in nip pressure that correspond to the regions of relatively high penetration of substrate resin.

In some cases, the gap and the nip are coextensive. In some other cases, the gap is defined between the mold roll and a fixed extrusion head.

In some embodiments, the regions of relatively high penetration of substrate resin into the preformed material are arranged in a checkerboard pattern along the strip of preformed material.

In some configurations, the array of fastener elements is disposed on a front face of the substrate and the strip of preformed material is attached to a back face of the substrate. The preformed material is, in some embodiments, coextensive with the back face of the substrate.

In some other configurations, the strip of preformed material and the array of fastener elements are both disposed on a common side of the substrate.

In some embodiments, the strip of preformed material comprises a strip of loop material having exposed loops arranged for releasable engagement by the fastener elements.

According to a fifth aspect of the invention, an apparatus for fabricating a composite touch fastener is provided. The composite touch fastener, as described above, is in the form of an elongated sheet-form resin substrate having a front face, a loop strip carried on the front face of the substrate (the loop strip having width and forming a discrete band of hook-engageable, extended loops along the length of the touch fastener), and an array of loop-engageable fastener elements carried on the front face of the substrate and forming a discrete band of fastener elements extending longitudinally along the substrate. The apparatus includes a rotating mold roll defining a multiplicity of fixed cavities about its periphery for molding the fastener elements, means of supplying molten resin to the mold roll under conditions which cause the resin to fill the cavities and form the substrate, means of supplying a continuous strip of loop material between the molten resin and the mold roll under conditions which cause the strip of loop material to permanently bond to the front face of the substrate, and means of stripping the fastener elements from the cavities. The "means" elements of the apparatus will be understood to be those discussed or represented schematically herein or in the disclosures incorporated by reference, and their equivalents.

According to a sixth aspect of the invention, a method of fabricating a closure strip includes molding a continuous, sheet-form substrate having a band of fastener elements integrally molded with and extending from a front face of the substrate, and attaching a continuous strip of loop material to resin forming the front face of the substrate to form a discrete band of loops spaced apart from the band of fastener elements.

According to further aspects of the invention, methods of applying a reclosable fastener to sheet or film are provided, which include the steps of providing inter-engageable closure strip portions which are either separate strips or strip portions of a common member and joining the backing of the strip portions to respective portions of the surface of the sheet or film by application of energy such as heat, acoustic or radio-frequency energy, to produce for instance welding or adhesive bonding. At least a first of the closure strip portions provides an array of discrete fastener elements such as hook elements having crooks or hook elements having mushroom form, the fastener elements having stems integrally molded with and extending from a thermoplastic backing substrate. The other of the strip portions provides an array of engageable elements such as hook-engageable loops or fibers, or elements self-engageable with fastener elements of the first strip portion, such that the discrete elements of the strip portions are capable of forming a releasable closure. In one aspect, during joining, the fastener elements of the respective strip portions are inter-engaged and the backings of the strip portions are simultaneously joined to respective portions of the sheet or film by application of energy to the respective sheet or film portions, with insulating air pockets provided in the space created by the inter-engaged elements serving to limit thermal transfer and unwanted adhesion or bonding of the closure portions to each other.

In another aspect, the cooperating parts of the releasable closure are of materials that are incompatible or of significantly different melting temperatures such that, under temperature conditions of joining, the interengaged elements do not tend to adhere to each other. Such provisions can avoid the need for presence of a release sheet during the joining action.

In one example, loops or fibers of the second strip portion are encapsulated by and secured by thermoplastic resin of the backing of the respective closure strip portion, the loops or fibers being comprised of resin, such as polyester, that is incompatible with or has a higher melting temperature than the resin such as polyolefin, of the respective backing substrate, and/or of components of the opposed first strip portion, such that, under conditions of joining, the dissimilarity of the material of the loops or fibers serves to prevent detrimental change to the loops or fibers or detrimental adhesion or bonding of the loops or fibers to the first closure strip portion, preferably, the mass of the hook elements of the first portion being substantially greater than that of the loop elements, the thermal mass of the hook elements being sufficient to prevent undue distortion of the hooks during the joining action.

In such cases it is to be noted that the invention does not require the use of any particular resin for the various components. This permits the use of backing substrates of e.g. polypropylene, polyester and nylon for desired barrier qualities that polyethylene does not provide.

Also, in cases desired, a wide range of compatibility layers may be employed. For instance, for joining a polyester backing of a closure strip to a polyester sheet or film, a lower melting point layer on either component that adheres to each can be applied. In another case, or where the sheet is a plain or coated paper either a bonding layer may be introduced to one of the mating surfaces or the substance of the backing substrate itself may be used as the bonding surface, e.g. where the backing is polyethylene.

If made of an appropriate width, the closure strip of the invention can be folded and sealed to itself to form an enclosed bag.

By employing a very light, non-woven loop material and integrally molded fastener elements in several instances, the resulting product is relatively inexpensive and flexible.

The product of the invention is also useful in other applications, either as a packaging closure or as a general purpose fastener. Encapsulating fibers of the loop material in a predetermined pattern of alternating regions of light and heavy encapsulation can produce regions of particularly high loft in which hook-engageable fibers are particularly well-presented for engagement.

As a method of producing fastener products, the invention also provides a reliable method of securing very lightweight loop materials to the front face of a resin substrate having fastener elements, in many cases without adhesives and while the substrate and fastener elements are themselves being formed, eliminating a post-forming attachment step. The method does not require the loop material to have a variable fiber density to provide for variable resin penetration, and can therefore accommodate and locally bond loop materials having a homogeneous fiber density. As fibers of the loop material are, in many instances, directly encapsulated within resin of the substrate, undesirable delamination of loop material from the substrate is avoided during high peel loads. And, as the fastener elements are, in many cases, integrally molded with the substrate, delamination between the fastener elements and the substrate is also avoided. The fastener elements and resin substrate (including any tear strip features such as ribs and grooves appropriate for closure strips) can be molded in a single continuous process from the same flow of resin, with the loop material fed right through the substrate-forming gap or nip on the side of the resin adjacent the fastener element-forming mold roll.

By appropriately controlling the forming speed and resin temperature and pressure (the optimal values of which are interdependent and will depend on the type of resin employed and the geometry of the product, as will be understood by those of normal skill in the art), the resulting penetration of substrate resin into the loop material may be controlled so as to not completely flood the exposed surface of loops with resin. In many applications, the use of appropriately contoured staking rings in the region of the mold roll adjacent the loop material can help to form a pattern of lofted regions of loop material, which are less penetrated by resin than other areas. Such lofted regions can extend loops for ready engagement by fastener elements.

The apparatus of the invention can provide an efficient means of carrying out the steps of the inventive method described above, to produce a continuous strip of fastener product.

Other features and advantages will be apparent from the following detailed description and attached drawings, and from the disclosures of our earlier U.S. patent applications.

Other features and advantages of the invention will be apparent from the following description of embodiments, and from the claims.

### BRIEF DESCRIPTION OF THE DRAWINGS

Fig. 1 is a perspective view of a composite touch fastener in the form of a closure strip.
Figs. 1A and 1H are enlarged views of areas 1A and 1H, respectively, in Fig. 1.
Figs. 1B through 1G illustrate the structure of area 1 A in various other closure strip embodiments.
Fig. 2A illustrates the application of fill-shifting loads in a bag having the closure strip of Figs. 1 and 1B.
Fig. 2B illustrates the application of peel force to the closure strip of Figs. 1 and 1B.
Fig. 2C illustrates another closure strip configuration providing an inner/outer peel preference.
Fig. 3 illustrates a first method and apparatus for forming composite touch fastener tapes, such as the closure strips of Figs. 1 and 6.
Fig. 4 is an enlarged, unscaled view of the forming nip of the apparatus of Fig. 3.
Fig. 5 is a highly enlarged view of the loop material securing region of the nip of Fig. 4.
Fig. 5A illustrates an alternative arrangement of the loop material staking region.
Fig. 6 is an enlarged view of a portion of the outer edge of a staking ring.
Fig. 7 illustrates a second method and apparatus for forming composite touch fastener tapes, such as the closure strips of Figs. 1 and 6.
Fig. 8 shows a nip formed between a mold roll and a contoured pressure roll.
Fig. 9 is a transverse cross-section of a composite fastener tape formed in the nip of Fig. 9.

### DESCRIPTION OF EMBODIMENTS

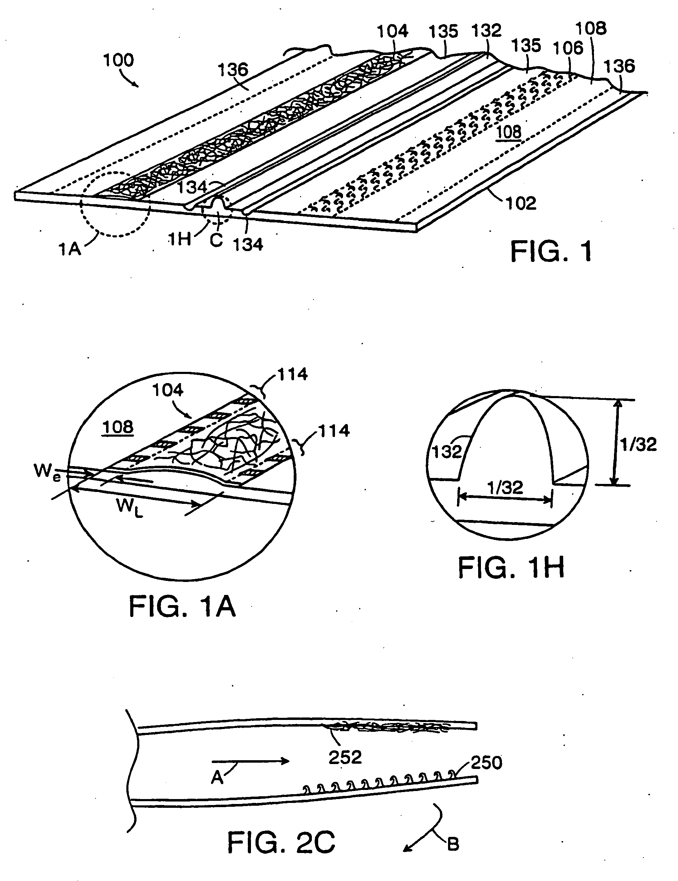

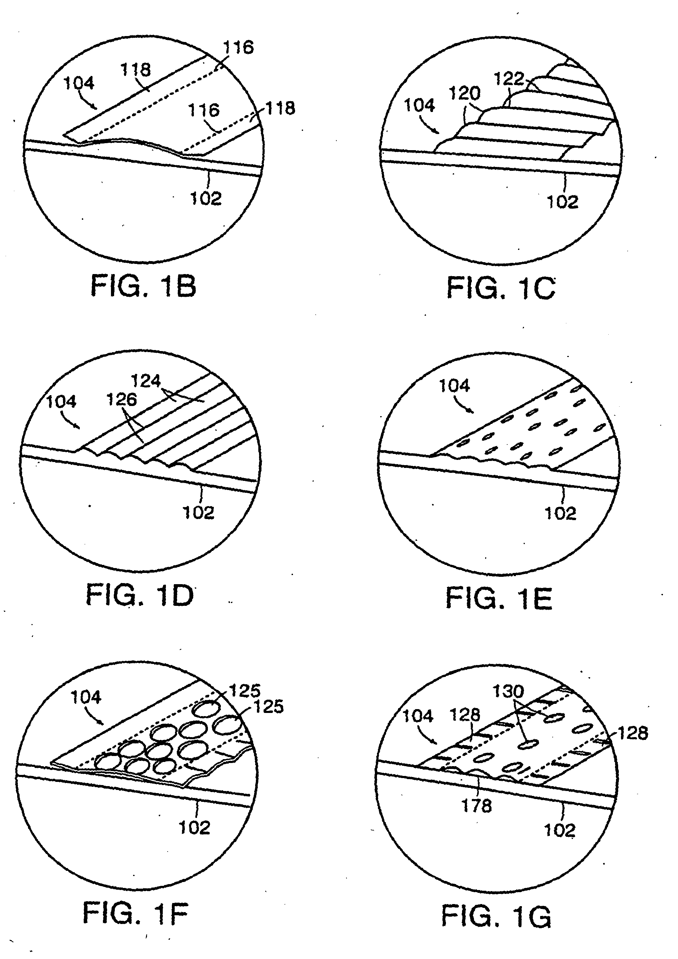

Referring to Fig. 1, a lengthwise-continuous closure strip 100, such as for sealing a bag, consists of a thin, sheet-form resin substrate 102 with lengthwise-continuous, parallel bands 104 and 106 of loops and fastener elements, respectively, on its front face 108. Bands 104 and 106 are equally spaced from the center "C" of the closure strip, such that when the strip is folded longitudinally at "C" to cover front face 108, the fastener elements of band 106 engage and retain the loops of band 104 to form a releasable fastening. The fastener elements 110 of band 106 are integrally molded with and extend from front face 108. In this embodiment, these fastener elements are in the form of J-hooks that extend, in rows, along the length of the closure strip. Some of the J-hooks face in opposite directions along the strip. Other fastener element shapes may also be employed, including those that overhang the substrate 102 in a widthwise direction. A suitable fastener element shape is the CFM29 hook shape (of about 0.37 mm (0.015 inch) in height), available in various products sold by Velcro USA in Manchester, New Hampshire.

Band 104 of loops consists of a preformed, non-woven web of polymer fibers, which may include a stabilizing binder, and which are bonded to front face 108 of substrate 102 at various points across the width and length of the web. Suitable loop materials include those disclosed in U.S. Patent application 08/922,292, and in the related PCT patent application PCT/US98/18401.

Preferably, the non-woven loop material in band 104 is very thin, such as less than about 1 mm (0.040 inch) thick (more preferably, less than about 0.5 mm (0.020 inch) thick), with web fibers held in a transversely stretched condition and freestanding loop structures extending from its exposed surface. As discussed in the above-referenced patent applications, the loop structures extend from associated knots in the stretched web, which may be stabilized by liquid binder wicked into the knots and cured. Between knots, the thin fiber mat is not very dense and is sheer enough to permit images to be readily seen through it. Overall, the loop material has a basis weight (in its preformed state, including any pre-applied binder) of less than about 136 grams per square meter (4 ounces per square yard), preferably less than about 68 grams per square meter (2 ounces per square yard). Other details of this loop material may be found in the above-referenced applications. For applications in which the loop material is partially penetrated by resin of the substrate as the substrate is formed (as discussed below), the needled loop material is preferably only stretched in a transverse direction only about 22 percent to leave a fair amount of loft and avoid total penetration.

In some instances, loop material 104 is partially encapsulated directly in resin of the substrate as the substrate is formed in a continuous molding process (described below). In other cases, it is bonded to the formed substrate, either by ultrasonic bonding, welding, or adhesives.

Some lightweight knits are also suitable loop materials for certain applications. Examples of such knits are Product 19902 from Guilford Knits in Greenville, South Carolina, which is of polyester fibers and has a basis weight of only about 54.4 grams per square meter (1.6 ounces per square yard). For a heavier knit, we prefer Guilford's Product 19029, a nylon knit of about 112.2 grams per square meter (3.3 ounces per square yard). Lightweight knit products are also available from TYBOR in Spain, and MIZARD in Italy.

Figs. 1A through 1D illustrate various patterns of variable bonding between loop material 104 and substrate 102. Such variable bonding patterns correspond, in some cases, to variable resin penetration into the web of the loop material, which may be achieved by employing different arrangements of staking rings and/or barrier materials between the loop material and substrate, both of which are discussed further below. In Fig. 1A, loop material 104 is only fully penetrated by substrate resin in narrow edge regions 114, and is less penetrated at its center. For instance, if loop material is about 19 mm (3/4 inch) wide (W_{L}), then fully penetrated edge regions 114 may have a width of only about 3.2 mm (1/8 inch) (wₑ). The center region of the loop material is less penetrated and gently arches away from the substrate, presenting the loops for engagement. The inclined sides of the center arch can also help to enhance the peel strength of the fastening at the edges of the loop material, as they resolve a small component of the peel force in a tangential, or shear, direction.

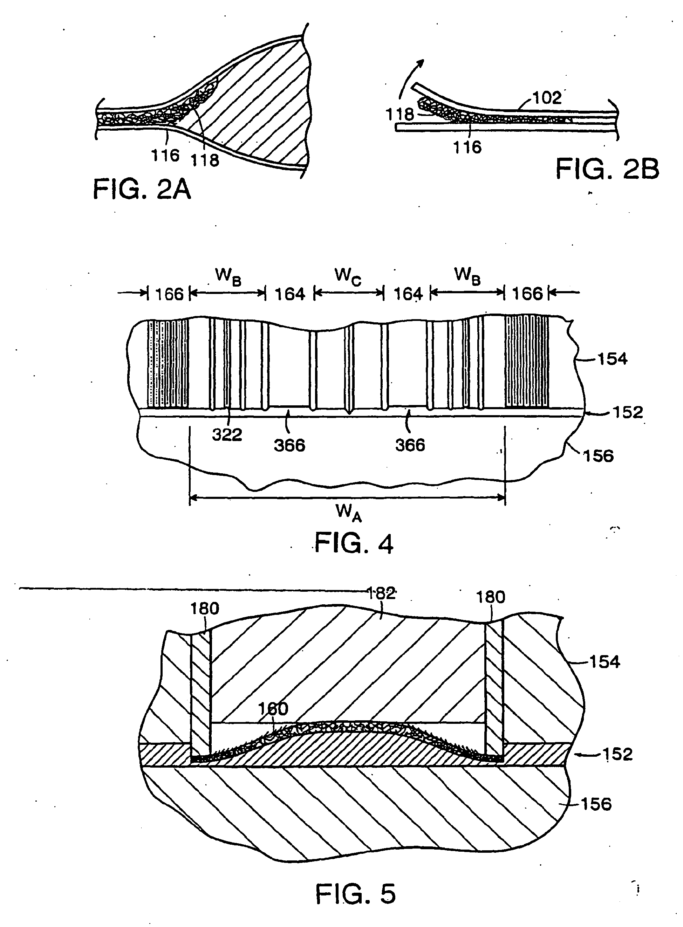

In Fig. 1B, the loop material is fully bonded to the substrate in narrow bands 116 spaced inward from its edges, leaving edge regions 118 relatively lightly bonded, or even loose. One advantage of this bonding pattern is that the inner edge region 118 on the inside of the associated bag helps to deflect separation loads caused by shifting bag contents, which would otherwise generate high peel forces between the fastener elements and the loops, into separation forces between the loop material and substrate (as illustrated in Fig. 2A). The high bonding strength of inner band 118 helps to avoid delamination of the loop material from the substrate. Another advantage of this bonding pattern is that it enhances initial peel strength of the fastening, as the outer edge region 118 of the loop material follows the fastener elements during peel until it is separated in shear (Fig. 2B).

Having only one inner edge region 118 unbonded can in some instances provide better inner opening resistance (e.g., from content shifting) than having both inner edge regions free. We presently prefer to leave only the edge of the loop side of the closure strip unattached to the bag web in most cases with the hook side edge bonded to the inner surface of the bag web.

Another closure arrangement for providing good resistance to being opened from inside the bag but readily opened from outside the bag is shown in Fig. 2C. All of the hook elements 250 are arranged with their loop-engaging tips facing the inside of the bag, providing a difference in inside and outside peel resistances. With the hooks fully engaging the loops of loop material 252, peel forces applied to the closure by movement of bag contents in the direction of arrow "A" are resisted to a greater degree than user-applied peel forces in the direction of arrow "B".

The pattern of variable bonding shown in Fig. 1C creates transverse pillows 120 of relatively lightly bonded, or loose, loop material separated by transverse bands 122 of relatively more fully bonded (e.g., more deeply encapsulated) loop material. The loftiness of pillows 120 is exaggerated for illustration. This pattern provides some of the peel-enhancing and load-shifting advantages of the pattern of Fig. 1B, due to the "free" pillow ends along the inner and outer edges of the loop material.

Fig. 1D illustrates a bonding pattern with longitudinal pillows 124 of relatively lightly bonded, or loose, loop material, separated by longitudinal bands 126 of relatively more fully bonded (e.g., more deeply encapsulated) loop material. Again, the loftiness of the pillows is exaggerated for illustration. Fig. 1E is a variation of the pattern of Fig. 1D, with each longitudinal band of more fully bonded material separated into longitudinally alternating regions of light and heavy bonding. The regions of light and heavy bonding are staggered across the loop material, producing a checkerboard pattern of lofted loop pillows. In the pattern illustrated in Fig. 1F, the center region of loop material 104 is heavily bonded to the substrate about the peripheries of spaced apart, circular lofted regions 125 which are less firmly bonded. The exposed surfaces of the lofted loop pillows 125 extend outward to present loops for engagement. Other shapes of lofted regions 125, such as ovals, may also be employed. One of the edge regions of the loop material of Fig. 1F is similar to the edge regions shown in Fig. 1B, while the other forms transverse pillows similar to those of Fig. 1C. Fig. 1G shows a bonding pattern with edge regions 128 of alternating light and heavy bonding, and a center region bonded in only isolated regions 130. The bonding patterns described above may be mixed and varied for different applications, as required.

As an alternative to feeding a preformed sheet of loop material into a forming nip to create the loop band 104 of the closure strip, engageable loops may be formed subsequent to forming the base of the closure strip by stitching loops directly into the base (as in a MALAMO process), or by bonding a strip of loop material to the face of the closure strip.

Referring back to Fig. 1, molded into the front face 108 of substrate 102 along its center is a hump-shaped longitudinal rib 132 between a pair of grooves 134 molded into front face 108. As shown in Fig. 1H, one example of this rib 132 has a height of about 0.8 mm (1/32 inch) and a width of about 0.8 mm (1/32 inch) at its base. The rib may have a hump-shaped profile, as shown, or a rectangular cross-section with parallel sides. The rib is preferably longitudinally continuous, as shown, but may alternatively be formed as a row of appropriately shaped protrusions. At least one of the flat regions 135 between grooves 134 and the loop and hook bands 104 and 106 in Fig. 1 contains, in some cases, a layer of adhesive such as a pressure sensitive adhesive (not shown), for providing a reclosable seal for applications where a resealable opening is desired. In these instances surfaces 135 provide an airtight, non-ventilated seal when the bag is closed, and supplement the mechanical closure strength of the hook and loop fasteners. Preferably, an adhesive is employed which has been compounded so that it sticks primarily only to itself or to the opposing face of the substrate, so as to not pick up excessive debris from the bag contents. In other, non-illustrated embodiments, either grooves 134 or rib 132, or both, are formed on the back face of the substrate, opposite the fastener elements and loop material.

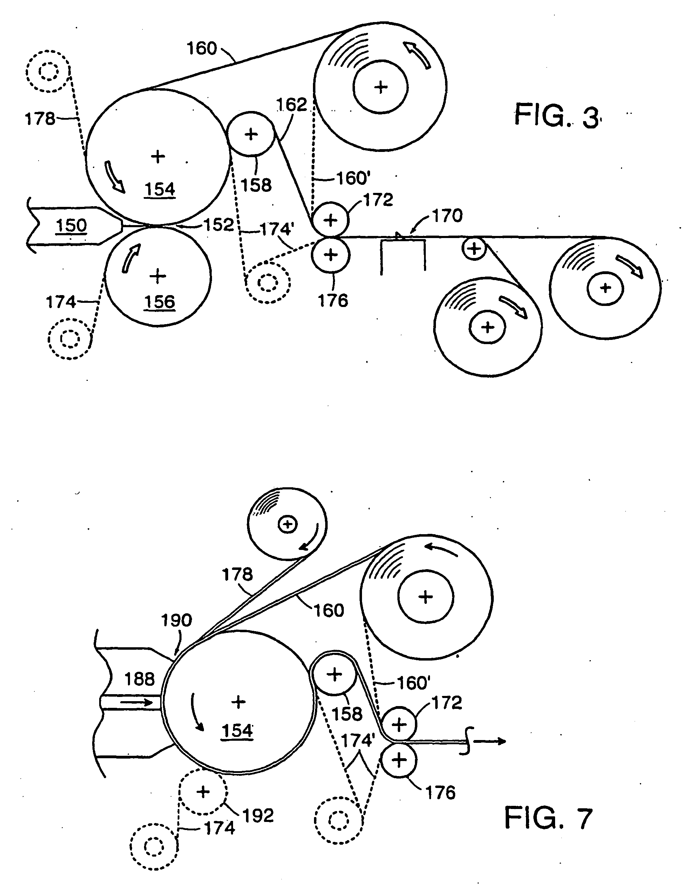

Fig. 3 illustrates one method and apparatus for producing the above-described closure strips. The method builds upon the continuous extrusion/roll-forming method for molding fastener elements on an integral, sheet-form base described by Fischer in U.S. Patent 4,794,028, and the nip lamination process described by Kennedy, et al. in U.S. Patent 5,260,015. The relative position and size of the rolls and other components is not to scale. An extrusion head 150 supplies a continuous sheet of molten resin to a nip 152 between a rotating mold roll 154 and a counter-rotating pressure roll 156. Mold roll 154 contains an array of miniature, fastener element-shaped mold cavities extending inward from its periphery (not shown) for molding the fastener elements. Pressure in nip 152 forces resin into the fastener element cavities and forms the substrate. The formed product is cooled on the mold roll until the solidified fastener elements (e.g. hooks) are stripped from their fixed cavities by a stripper roll 158. Along with the molten resin, a continuous strip of loop material 160 (which becomes loop band 104 in Fig. 1) is fed into nip 152, where it is partially impregnated by resin and becomes permanently bonded to the front face of the substrate. Thus the product 162 that is stripped from the mold roll includes both fastener elements and loops.

For higher production rates, two or more widths of closure strip may be simultaneously produced on a single mold roll, and later split and spooled. Referring also to Fig. 4, two strips 160 of loop product are fed in parallel into positions 164 along nip 152. Molten resin is introduced across the entire nip, forming two bands of hooks in regions 166. Mold roll plates of appropriate widths and edge configurations are arranged to produce the ribs and grooves at the center of each closure strip. A splitting channel ring 168 at the center of the mold roll produces a splitting channel in the product, along which the resulting tape is split by a blade 170 (Fig. 3; either stationary or rotating) into two separate runs of closure strip which are separately spooled. In some configurations, a wide section of the mold roll surface is defined by a single, solid roll sleeve having a profiled outer surface for forming one or more of the series of features extending along the closure strip. For instance, in one arrangement, the entire width W_{A} of the mold roll surface between the hook bands is defined by a single sleeve having a ground circumferential profile defining all features between the hook bands. When thin staking rings (discussed below) are employed in the loop material regions 366, widths W_{B} and W_{C} of the mold roll surface are preferably formed by solid, wide mold roll sections. Employing such wide plates provides additional resistance to mold roll bending loads caused by molding nip pressures, enabling wider product widths to be formed without excessive product thickness variations.

Fig. 3 also indicates several variations of the above-described method. For instance, rather than introduce the loop material 160 through nip 152 and thereby join it to the substrate as the substrate is molded, the loop material may be joined to the substrate after the substrate has been formed, such as is indicated by the run 160' of loop material shown in dashed outline. In this case, front face idler 172 is heated and has a contoured surface for producing the desired pattern of bonding between the loop material and the substrate. Paper may be joined to the back face of the substrate by either running a strip 174 of paper through nip 152 on the pressure roll side of the resin, or by adhering adhesive-coated paper 174' to the formed substrate either at stripping roll 158 or at idler 176. In some cases, adhesive-coated paper 174' includes a transfer coating, such that its paper backing may be peeled from the adhesive on the back of the product to secure the back of the final product to a supporting surface. The adhesive applied to the back of the product in this manner may be either a pressure-sensitive or heat-activated adhesive, for instance. For decreasing the permeability of the final product, a second flow of resin (either molten or in the form of a film) may be added to the nip against pressure roll 156, as strip 174 is shown, to form a backing on the final product. For instance, a layer of polyester may be added to reduce the permeability of a polyethylene closure strip, such as for packaging certain foods. Adding a strip of barrier material 178 between the loop material and the molten resin optionally controls the pattern of penetration of resin into the loop material in nip 152. Barrier material 178 is, in some instances, a perforated paper or film that allows resin to pass into the loop material in selected regions but inhibits its flow into other regions, such as for producing the bonding pattern of the center region of loop material shown in Fig. 1G. The barrier material may also be a homogeneous sheet of material having a high porosity, equally limiting the penetration of resin into the loop material across the width of the barrier material. Rather than be introduced as a separate sheet, in some cases the barrier material is pre-applied to the surface of loop material 160 and may be in the form of a binder located in discrete areas of the loop material and locally encapsulating fibers of the loop material, for instance. In many cases, the barrier material is narrower than the loop material, and centered along the width of the loop material, to enable full penetration of resin into the edges of the loop material. In some cases, however, as to produce the bonding pattern of Fig. 1B, for instance, thin strips of barrier material are run into the nip along the edges of the loop material to inhibit the bonding of edge regions 118 (Fig. 1B) to the substrate. Other arrangements of barrier and loop materials, and resulting bonding patterns, will be apparent upon reading this disclosure. In all cases in which the barrier material becomes permanently bonded to the substrate and therefore becomes an integral part of the final product, it should be selected for its low material cost and weight.

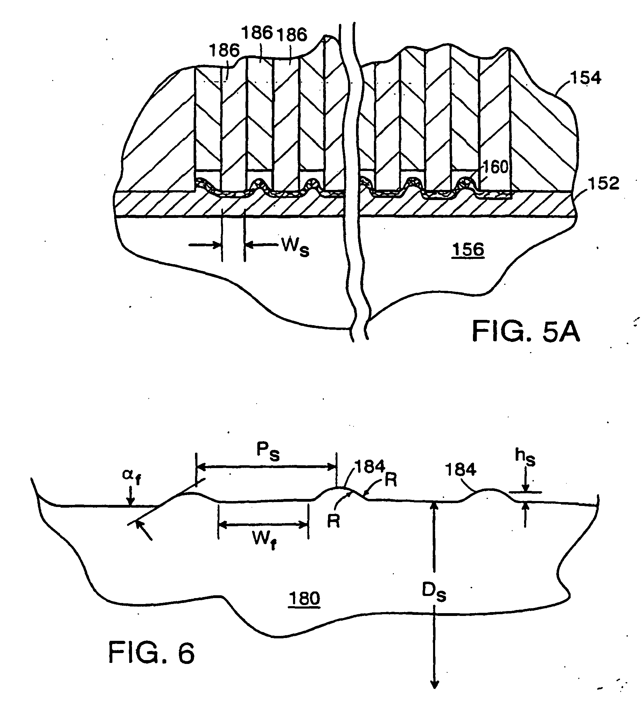

Fig. 5 illustrates the bonding of the loop material 160 to the resin of the substrate in area 164 of nip 152 (Fig. 4). "Staking" rings 180 on either side of a reduced diameter plate 182 engage the edges of the loop material to locally hold the edges of the loop material against the resin of the substrate as the resin forms the substrate under nip pressure, thereby ensuring heavy penetration of the loop material in predetermined areas along its edges. This configuration shown in Fig. 5 produces the bonding pattern illustrated in Fig. 1A, the staking rings 180 forming heavily bonded edge regions 114, the width wₑ corresponding to the width of the staking ring. The staking rings may extend slightly beyond the nominal mold roll diameter, as shown in Fig. 5, or be flush with adjoining mold roll rings (as shown in Fig. 5A, for example).

To form a row of heavily bonded points separated by regions of lower resin penetration, some staking rings 180 have a contoured outer edge as shown in Fig. 6. A series of protrusions 184 extending beyond the nominal diameter Dₛ of the staking ring cause the resin to locally penetrate farther into the loop material. In this example configuration, Dₛ is 25.3 cm (9.968 inches), the height (hₛ) of each protrusion 184 is 0.36 mm (0.014 inch), and the inner and outer radii (R) at the flank of each protrusion is 0.38 mm (0.015 inch). The protrusion pitch (Pₛ) is 4.8 mm (0.190 inch), and the length of the flat between protrusions (w_{f}) is 3.3 mm (0.130 inch). The dimensions of the protrusions are selected to attempt to optimize the maximum approach angle α_{f} of the protrusion flank with respect to a local ring tangent. A steep approach angle (i.e., an abrupt change in ring diameter) can cause a sharp local increase in nip pressure and an undesirable local flooding of the front side of the loop material with resin. Such flooded areas can create local "depth stops" to mating fastener elements, reducing the fastener element penetration into the loop material. A zero approach angle (i.e., no protrusions) would result in a homogeneous resin penetration beneath the staking ring, which may not be as desirable as local loop material "pillowing" (discussed above) in some applications. The maximum approach angle α_{f} in the illustrated staking ring embodiment is about 40 degrees. A shallower angle (e.g., of about 30 degrees) may be preferable in some cases, as may a longer spacing w_{f} between protrusions to provide longer, lofted pillow regions.

Fig. 5A shows a staking ring configuration for producing the bonding pattern shown in Fig. 1E. Staking rings 186 having the profile shown in Fig. 6 are stacked together with staggered protrusions, such that the pattern of heavily bonded regions resembles a checkerboard with elongated "pillows" extending outward between the heavily bonded regions. The width wₛ of each ring is about 0.46 mm (0.018 inch).

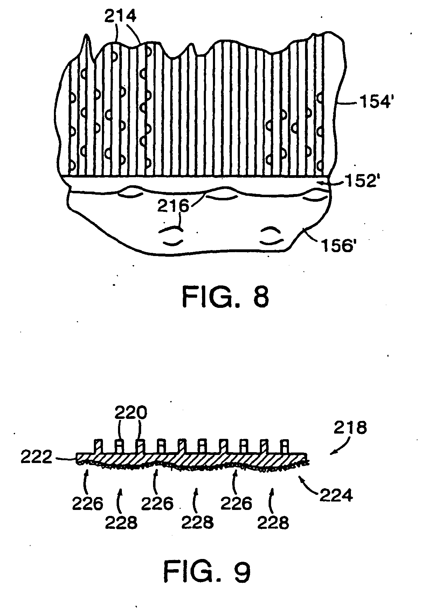

This in situ staking method for attaching loop material to the resin of a fastener substrate as the substrate is being formed has broad applicability to the production of composite touch fasteners. For example, Fig. 8 shows a nip 152' between a mold roll 154' and a pressure roll 156'. Mold roll 154' contains many thin fastener element molding rings 214, which may be alternated with spacer rings (not shown), to integrally mold fastener elements extending from one side of a sheet-form base as taught by Fischer. In this case, however, pressure roll 156' has a pattern of protrusions 216 extending from its otherwise smooth surface.
The protrusions locally narrow gap 152' in discrete regions, causing a variation in nip pressure during formation of the fastener tape. Running a fibrous preformed material through the nip against the pressure roll with the molten resin, as taught by Kennedy, et al., will, in this configuration, cause fibers of the preformed material to be encapsulated more fully in the resin in areas corresponding to protrusions 216. This in situ "staking" method is particularly useful when the fibrous preformed material is a very porous, thin material such as a needled non-woven web with a low basis weight. The pattern of protrusions on the pressure roll is selected to form an inverse pattern of lofted "pillows" of loop material at most only partially encapsulated in the substrate resin.

Fig. 9 is a transverse cross-section of a composite fastener tape 218 produced in this fashion, having an array of hook-shaped fastener elements 220 extending from one side of the substrate 222, and a lightweight, non-woven web of loop material 224 permanently bonded to an opposite side of the substrate. Loop material 224 is coextensive with the substrate in this case (i.e., it extends across the full width of the substrate), but is fully encapsulated in substrate resin only in discrete regions 226. Between regions 226, the loop material forms the above-described "pillows" 228, or lofted regions, which are not fully encapsulated in resin. The loft of pillows 228 enables the heads of fastener elements 220 to penetrate the loop material and engage individual fibers during fastening. A similarly contoured pressure roll 156' (Fig. 8) may also be employed to attach a strip of loop material to the fastener element side of a fastener tape.

Fig. 7 illustrates an alternative method and apparatus for forming the above-described closure strips. The contoured surface of an extrusion head 188 (sometimes called an injection head) is placed adjacent a mold roll 154 (with fixed fastener element molding cavities as described above with respect to Fig. 3), and a continuous flow of molten resin is injected under pressure into the gap 190 defined between head 188 and mold roll 154, filling the fastener element cavities and forming the front and back faces of the substrate. The configuration and construction of mold roll 154 is the same as is shown in Fig. 4, in which member 156 may be taken to be the adjoining extrusion head. The strip 160 of loop material is fed through a predetermined region of gap 190, and held up against the surface of mold roll 154 by resin pressure in the gap. In this manner, the loop material is partially impregnated with substrate resin and permanently bonded to the front face of the substrate. In applications where it is not possible to fill the fastener element cavities without completely saturating the loop surface of the loop material with resin, a strip of barrier material 178 may be fed through gap 190 between head 188 and loop material 160. Barrier material 178 is discussed in more detail above with respect to Fig. 3. For some applications a strip 174 of paper or other suitable backing material is laminated to the back face of the substrate while the molded product is retained on mold roll 154, by pressure supplied by a pressure roll 192, as shown in dashed outline. Alternatively, a strip of adhesive-coated paper 174' may be adhered to the formed substrate either at stripping roll 158 or at idler 176.

## Claims

1. A method of fabricating a touch fastener (100) comprising a substrate (102) having an array of fastener elements (110) extending integrally therefrom and a loop material (104; 160) attached to the substrate (102), the method comprising:
continuously introducing molten resin to a rotating mold roll (154; 154') defining a multiplicity of molding cavities extending inward from its periphery under conditions which cause the resin to fill the cavities to at least partially form the fastener elements (110) and to form the substrate (102); and
attaching a continuous strip of the loop material (104; 160) to resin of the substrate (102) in a nip (152; 152') defined between the mold roll (154; 154') and a pressure roll (156; 156'),
**characterized in that** attaching the loop material (104; 160) to the substrate (102) comprises forming one or more regions (114; 122; 126) of high penetration of substrate resin into the loop material (104; 160) and one or more regions (120; 124; 125) of low penetration of substrate resin into the loop material (104; 160).

2. The method of claim 1, wherein attaching the loop material (104; 160) to the substrate (102) comprises causing pressure variations within the nip (152; 152').

3. The method of claim 1 or 2, wherein the molding cavities comprise fastener-element shaped molding cavities.

4. The method of anyone of the claims 1 to 3 wherein the mold roll (154; 154') has protrusions (186) extending therefrom into the nip (152; 152'), the protrusions (186) corresponding to the regions (114; 122; 126) of relatively high penetration of substrate resin into the loop material (104; 160).

5. The method of claim 4, wherein the protrusions comprise staking rings (186).

6. The method of claim 5, wherein one or more of the staking rings (186) comprise a plurality of protrusions (184) extending from an outer surface thereof.

7. The method of anyone of the claims 1 to 6 wherein the pressure roll (156') has protrusions (216) extending therefrom into the nip (152'), the protrusions (216) corresponding to the regions (114; 122; 126) of relatively high penetration of substrate resin into the loop material (104; 160).

8. The method of anyone of the claims 1 to 7 wherein the molten resin is introduced into the nip (152; 152').

9. The method of anyone of the claims 1 to 8 wherein the regions (114; 122; 126) of relatively high penetration of substrate resin into the loop material (104; 160) are arranged in a checkerboard pattern along the loop material (104; 160).

10. The method of anyone of the claims 1 to 9 wherein the loop material (104; 160) comprises a non-woven web of entangled fibers forming loops and having a basis weight of less than about 0,136 kg pro m² (4 ounces per square yard).

11. The method of anyone of the claims 1 to 10 wherein the loop material (104; 160) and the array of fastener elements (110) are disposed on a common side of the substrate (102).

12. The method of anyone of the claims 1 to 11 wherein the fastener elements (110) are disposed on a front face of the substrate (102) and the loop material (104; 160) is attached to a back face of the substrate (102).

13. The method of anyone of the claims 1 to 12 wherein the fastener elements (110) comprise hooks.

14. A molding apparatus for molding fasteners (100) comprising a loop material (104; 160) bonded to a resin substrate (102) and an array of fastener elements (110) extending integrally from the substrate (102), the molding apparatus comprising:
a mold roll (154; 154') defining a multiplicity of molding cavities extending inward from its periphery, the molding cavities being arranged to at least partially form the fastener elements (110); and
a pressure roll (156; 156') positioned adjacent the mold roll (154;154'), the pressure roll (156, 156') and the mold roll (154; 154') forming a nip (152; 152') therebetween,
**characterized in that** a plurality of protrusions (186; 216) extend from at least one of the mold roll (154; 154') and the pressure roll (156; 156') and into the nip (152; 152') such that one or more regions (114; 122; 126) of high penetration of substrate resin into the loop material (104; 160) and one or more regions (120; 124; 125) of low penetration of substrate resin into the loop material (104; 160) are formed when the loop material (104; 160) and resin are fed through the nip (152; 152'). ,

15. The apparatus of claim 14 wherein the plurality of protrusions extend from mold roll (154), the protrusions corresponding to the regions (114; 122; 126) of relatively high penetration of substrate resin into the loop material.

16. The apparatus of claim 14 or 15, wherein the protrusions comprise staking rings (186).

17. The apparatus of claim 16, wherein at least one of the staking rings (186) comprises a plurality of protrusions (184) extending from an outer edge thereof.

18. The apparatus of claim 16 or 17, wherein a plurality of the staking rings (186) comprise protrusions (184) extending from outer edges thereof, the protrusions (184) being staggered about the mold roll (154).

19. The apparatus of claim 14 wherein the protrusions (216) extend from the pressure roll (156'), the protrusions (216) corresponding to the regions (114; 122; 126) of relatively high penetration of substrate resin into the loop material.

20. The apparatus of anyone of the claims 14 to 19, wherein the molding cavities comprise fastener-element shaped molding cavities.

## Patentansprüche

1. Verfahren zur Herstellung eines Haft- bzw. Klettverschlusses (100), der ein Substrat (102) mit einer Anordnung von sich integral davon erstreckenden Befestigungs- bzw. Verschlusselementen (110) und ein an dem Substrat (102) befestigtes Schleifenmaterial (104; 60) umfasst, wobei das Verfahren umfasst:
kontinuierliches Einführen von geschmolzenem Harz zu einer rotierenden Formwalze (154; 154'), die eine Vielzahl von Formkavitäten bzw. Hohlräumen begrenzt bzw. definiert, die sich von ihrem Umfang nach innen erstrecken, unter Bedingungen, die bewirken, dass das Harz die Hohlräume füllt, um zumindest teilweise die Verschlusselemente (110) zu bilden und um das Substrat (102) zu bilden; und
Befestigen eines kontinuierlichen bzw. zusammenhängenden Streifens aus dem Schlaufenmaterial (104; 160) an Harz des Substrats (102) in einem Walzenspalt (152, 152'), der zwischen der Formwalze (154; 154') und einer Druckwalze (156; 156') definiert ist,
**dadurch gekennzeichnet, dass** das Befestigen des Schlaufenmaterials (104; 160) an dem Substrat (102) das Bilden eines oder mehrerer Bereiche (114; 122; 126) mit hoher Eindringung des Substratharzes in das Schlaufenmaterial (104; 160) und einen oder mehrere Bereiche (120; 124; 125) mit geringer Eindringung des Harzes in das Schlaufenmaterial (104; 160) umfasst.

2. Verfahren nach Anspruch 1, wobei das Befestigen des Schlaufenmaterials (104; 160) an dem Substrat (102) das Bewirken von Druckvariationen innerhalb des Walzenspalts (152, 152') umfasst.

3. Verfahren nach Anspruch 1 oder 2, wobei die Formhohlräume verschlusselementförmige Formhohlräume umfassen.

4. Verfahren nach einem der Ansprüche 1 bis 3, wobei die Formwalze (154; 154') Vorsprünge (186) hat, die sich von ihr in den Walzenspalt (152; 152') erstrecken, wobei die Vorsprünge (186) den Bereichen (114; 122; 126) mit relativ hoher Eindringung des Substratharzes in das Schlaufenmaterial (104; 160) entsprechen.

5. Verfahren nach Anspruch 4, wobei die Vorsprünge Stützringe (186) umfassen.

6. Verfahren nach Anspruch 5, wobei einer oder mehrere der Stützringe (186) eine Vielzahl von Vorsprüngen (184) umfassen, die sich von einer Außenfläche davon erstrecken.

7. Verfahren nach einem der Ansprüche 1 bis 6, wobei die Druckwalze (156') Vorsprünge (216) hat, die sich von ihr in den Walzenspalt (152') erstrecken, wobei die Vorsprünge (216) den Bereichen (114; 122; 126) mit relativ hoher Eindringung des Substratharzes in das Schlaufenmaterial (104; 160) entsprechen.

8. Verfahren nach einem der Ansprüche 1 bis 7, wobei das geschmolzene Harz in den Walzenspalt (152; 152') eingeführt wird.

9. Verfahren nach einem der Ansprüche 1 bis 8, wobei die Bereiche (114; 122; 126) mit relativ hoher Eindringung des Substratharzes in das Schlaufenmaterial (104; 160) in einem Schachbrettmuster entlang dem Schlaufenmaterial (104; 160) angeordnet sind.

10. Verfahren nach einem der Ansprüche 1 bis 9, wobei das Schlaufenmaterial (104; 160) eine nicht gewebte bzw. Vliesbahn aus verwickelten bzw. verschränkten Fasern umfasst, die Schlaufen bilden und ein Flächengewicht von weniger als etwa 0,136 kg pro m² (4 Unzen pro Quadratyard) haben.

11. Verfahren nach einem der Ansprüche 1 bis 10, wobei das Schlaufenmaterial (104; 160) und die Anordnung mit Verschlusselementen (110) auf einer gemeinsamen Seite des Substrats (102) angeordnet sind.

12. Verfahren nach einem der Ansprüche 1 bis 11, wobei die Verschlusselemente (110) auf einer Vorderfläche des Substrats (102) angeordnet sind und das Schlaufenmaterial (104; 160) auf einer Rückfläche des Substrats (102) befestigt ist.

13. Verfahren nach einem der Ansprüche 1 bis 12, wobei die Verschlusselemente (110) Haken umfassen.

14. Formvorrichtung zum Formen von Verschlüssen (100), die ein an ein Harzsubstrat (102) geklebtes Schlaufenmaterial (104; 160) und eine Anordnung von Verschlusselementen (110) umfassen, welche sich integral von dem Substrat (102) erstrecken, wobei die Formvorrichtung umfasst:
eine Formwalze (154; 154'), die eine Vielzahl von Formhohlräumen definiert, die sich von ihrem Umfang nach innen erstrecken, wobei die Formhohlräume derart angeordnet sind, dass sie zumindest teilweise die Verschlusselemente (110) bilden; und
eine Druckwalze (156; 156'), die benachbart zu der Formwalze (154; 154') angeordnet ist, wobei die Druckwalze (156; 156') und die Formwalze (154; 154) einen Walzenspalt (152; 152') dazwischen bilden,
**dadurch gekennzeichnet, dass** eine Vielzahl von Vorsprüngen (186; 216) sich von der Formwalze (154; 154') und/oder der Druckwalze (156; 156') in den Walzenspalt (152; 152') erstreckt, so dass ein oder mehrere Bereiche (114; 122; 126) mit hoher Eindringung von Substratharz in das Schlaufenmaterial (104; 160) und ein oder mehrere Bereiche (120; 124; 125) mit geringer Eindringung von Substratharz in das Schlaufenmaterial (104; 160) ausgebildet werden, wenn Schlaufenmaterial und Harz durch den Walzenspalt (152; 152') zugeführt werden.

15. Vorrichtung nach Anspruch 14, wobei die Vielzahl der Vorsprünge sich von der Formwalze (154) erstreckt, wobei die Vorsprünge den Bereichen (114; 122; 126) mit relativ hoher Eindringung des Substratharzes in das Schlaufenmaterial entsprechen.

16. Vorrichtung nach Anspruch 14 oder 15, wobei die Vorsprünge Stützringe (186) umfassen.

17. Vorrichtung nach Anspruch 16, wobei wenigstens einer der Stützringe (186) eine Vielzahl von Vorsprüngen (184) umfasst, die sich von seinem Außenrand erstrecken.

18. Vorrichtung nach Anspruch 16 oder 17, wobei eine Vielzahl der Stützringe (186) Vorsprünge (184) umfasst, die sich von ihren Außenrändern erstrecken, wobei die Vorsprünge (184) um die Formwalze (154) versetzt sind.

19. Vorrichtung nach Anspruch 14, wobei die Vorsprünge (216) sich von der Druckwalze (156') erstrecken, wobei die Vorsprünge (216) den Bereichen (114; 122; 126) mit relativ hoher Eindringung des Substratharzes in das Schlaufenmaterial entsprechen.

20. Vorrichtung nach einem der Ansprüche 14 bis 19, wobei die Formhohlräume verschlusselementförmige Formhohlräume umfassen.

## Revendications

1. Procédé de fabrication d'un produit de fixation par contact (100) comprenant un substrat (102) ayant une rangée d'éléments de fixation (110) qui s'étendent en un seul tenant depuis celui-ci et un matériau à bouclettes (104 ; 160) fixé sur le substrat (102), le procédé comprenant :
l'introduction en continu de résine moulée vers un rouleau de moulage en rotation (154 ; 154') qui définit une multiplicité de cavités de moulage s'étendant vers l'intérieur depuis sa périphérie dans des conditions qui provoquent que la résine remplisse les cavités afin de remplir au moins en partie les éléments de fixation (110) et de former le substrat (102) ; et
la fixation d'une bande continue de matériau à bouclettes (104 ; 160) sur la résine du substrat (102) dans un point de contact (152 ; 152') défini entre le rouleau de moulage (154 ; 154') et un rouleau de pression (156 ; 156'),
**caractérisé en ce que** la fixation du matériau à bouclettes (104 ; 160) sur le substrat (102) comprend le formage d'une ou de plusieurs régions (114 ; 122 ; 126) de haute pénétration de la résine de substrat jusque dans le matériau à bouclettes (104 ; 160) et d'une ou de plusieurs régions (120 ; 124 ; 125) de basse pénétration de la résine de substrat jusque dans le matériau à bouclettes (104 ; 160).

2. Procédé selon la revendication 1, dans lequel la fixation du matériau à bouclettes (104 ; 160) sur le substrat (102) comprend la provocation des variations de pression à l'intérieur du point de contact (152 ; 152').

3. Procédé selon l'une ou l'autre des revendications 1 et 2, dans lequel les cavités de moulage comprennent des cavités de moulage formées d'éléments de fixation.

4. Procédé selon l'une quelconque des revendications 1 à 3, dans lequel le rouleau de moulage (154 ; 154') a des saillies (186) qui s'étendent depuis celui-ci jusque dans le point de contact (152 ; 152'), les saillies (186) correspondant aux régions (114 ; 122 ; 126) de pénétration relativement haute de la résine de substrat jusque dans le matériau à bouclettes (104 ; 160).

5. Procédé selon la revendication 4, dans lequel les saillies comprennent des bordures de piquage (186).

6. Procédé selon la revendication 5, dans lequel une ou plusieurs des bordures de piquage (186) comprend (comprennent) une pluralité de saillies (184) qui s'étendent depuis une surface extérieure de celle(s)-ci.

7. Procédé selon l'une quelconque des revendications 1 à 6, dans lequel le rouleau de pression (156') a des saillies (216) qui s'étendent depuis celui-ci jusque dans le point de contact (152'), les saillies (216) correspondant aux régions (114 ; 122 ; 126) de pénétration relativement haute de la résine dé substrat jusque dans le matériau à bouclettes (104 ; 160).

8. Procédé selon l'une quelconque des revendications 1 à 7, dans lequel la résine moulée est introduite jusque dans le point de contact (152 ; 152').

9. Procédé selon l'une quelconque des revendications 1 à 8, dans lequel les régions (114 ; 122 ; 126) de pénétration relativement haute de la résine de substrat jusque dans le matériau à bouclettes (104 ; 160) sont agencées selon une trame en noir et blanc le long du matériau à bouclettes (104 ; 160).

10. Procédé selon l'une quelconque des revendications 1 à 9, dans lequel le matériau à bouclettes (104 ; 160) comprend une bande de non-tissé de fibres emmêlées qui forment des bouclettes et qui ont un poids de base inférieur à environ 0,136 kg par m² (4 onces par yard carré).

11. Procédé selon l'une quelconque des revendications 1 à 10, dans lequel le matériau à bouclettes (104 ; 160) et la rangée d'éléments de fixation (110) sont agencés sur un côté commun du substrat (102).

12. Procédé selon l'une quelconque des revendications 1 à 11, dans lequel les éléments de fixation (110) sont agencés sur une face frontale du substrat (102) et dans lequel le matériau à bouclettes (104 ; 160) est fixé sur une face arrière du substrat (102).

13. Procédé selon l'une quelconque des revendications 1 à 12, dans lequel les éléments de fixation (110) comprennent des crochets.

14. Appareillage de moulage pour le moulage de produits de fixation (100) comprenant un matériau à bouclettes (104 ; 160) relié à un substrat de résine (102) et une rangée d'éléments de fixation (110) qui s'étendent en un seul tenant depuis le substrat (102), l'appareil de moulage comprenant :
un rouleau de moulage (154 ; 154') qui définit une multiplicité de cavités de moulage s'étendant vers l'intérieur depuis sa périphérie, les cavités de moulage étant agencées afin de former au moins en partie les éléments de fixation (110) ; et
un rouleau de pression (156 ; 156') positionné en adjacence au rouleau de moulage (154 ; 154'), le rouleau de pression (156 ; 156') et le rouleau de moulage (154 ; 154') formant un point de contact (152 ; 152') entre eux,
**caractérisé en ce qu'**une pluralité de saillies (186 ; 216) s'étend depuis au moins un des rouleaux parmi le rouleau de moulage (154 ; 154') et le rouleau de pression (156 ; 156') et jusque dans le point de contact (152 ; 152') de telle sorte qu'une ou plusieurs régions (114 ; 122 ; 126) de haute pénétration de la résine de substrat jusque dans le matériau à bouclettes (104 ; 160) et qu'une ou plusieurs régions (120 ; 124 ; 125) de basse pénétration de la résine de substrat jusque dans le matériau à bouclettes (104 ; 160) sont formées lorsque le matériau à bouclettes (104 ; 160) et la résine sont alimentés à travers le point de contact (152 ; 152').

15. Appareillage selon la revendication 14, dans lequel la pluralité de saillies s'étend depuis le rouleau de moulage (154), les saillies correspondant aux régions (114 ; 122 ; 126) de pénétration relativement haute de la résine de substrat jusque dans le matériau à bouclettes.

16. Appareillage selon l'une ou l'autre des revendications 14 et 15, dans lequel les saillies comprennent des bordures de piquage (186).

17. Appareillage selon la revendication 16, dans lequel au moins une des bordures de piquage (186) comprend une pluralité de saillies (184) qui s'étendent depuis un bord extérieur de celle-ci.

18. Appareillage selon l'une ou l'autre des revendications 16 et 17, dans lequel une pluralité des bordures de piquage (186) comprend des saillies (184) qui s'étendent depuis des bords extérieurs de celles-ci, les saillies (184) étant en zigzag autour du rouleau de moulage (154).

19. Appareillage selon la revendication 14, dans lequel les saillies (216) s'étendent depuis le rouleau de pression (156'), les saillies (216) correspondant aux régions (114 ; 122 ; 126) de pénétration relativement haute de la résine de substrat jusque dans le matériau à bouclettes.

20. Appareillage selon l'une quelconque des revendications 14 à 19, dans lequel les cavités de moulage comprennent des cavités de moulage formées d'éléments de fixation.
